# EUROPÄISCHE PATENTSCHRIFT

(11) **EP 1 824 694 B1**
(45) Veröffentlichungstag und Bekanntmachung des Hinweises auf die Patenterteilung: **28.10.2009**
(21) Anmeldenummer: 05815529.2
(22) Anmeldetag: 08.12.2005
(51) Int. Cl.: B60H 1/00

(54) **KLAPPE EINES KRAFTFAHRZEUG-BELÜFTUNGSSYSTEMS**
FLAP OF A MOTOR VEHICLE VENTILATION SYSTEM
CLAPET POUR UN SYSTEME D'AERATION D'UN VEHICULE

(30) Priorität: 10.12.2004 DE 102004059800
(43) Veröffentlichungstag der Anmeldung: 29.08.2007
(73) Patentinhaber: Behr GmbH & Co. KG, 70469 Stuttgart (DE); Gealan Formteile GmbH, 95145 Oberkotzau (DE)
(72) Erfinder: HEILEMANN, Juergen, 73240 Wendlingen (DE); MAHNINGER, Kurt, 70806 Kornwestheim (DE); SOMMERER, Gerd, 95168 Marktleuthen (DE); LAUBMANN, Gerhard, 95119 Naila (DE)
(74) Vertreter: Fleuchaus, Michael A.
(86) Internationale Anmeldenummer: PCT/EP2005/056617
(87) Internationale Veröffentlichungsnummer: WO 2006/061423

(56) Entgegenhaltungen:
- DE-A1- 19 934 624
- FR-A- 2 591 950
- US-A1- 2004 038 639

## Beschreibung

Die Erfindung betrifft eine Klappe eines Kraftfahrzeug-Belüftungssystems, gemäß dem Oberbegriff des Anspruches 1.

Bei herkömmlichen Kraftfahrzeug-Belüftungssystemen ist im Bereich vor einem Gebläse eine Umluft-Klappe und eine Frischluft-Klappe vorgesehen, die über eine gemeinsame Steuerung geöffnet und geschlossen werden können. Hierbei erfolgt bevorzugt die Steuerung der Klappen derart, dass die Umluft-Klappe bereits geschlossen ist, wenn die Frischluft-Klappe noch nicht ganz geöffnet ist, wofür eine sehr komplizierte Kinematik erforderlich ist.

FR 2 591 950 A1 offenbart eine Klappe für ein Kraftfahrzeug-Belüftungssystem, welche ein parallel zur Klappenschwenkachse angeordnetes Scharnier aufweist, um das ein Teilbereich der Klappe verschwenkbar ist.

Ausgehend von diesem Stand der Technik ist es Aufgabe der Erfindung, eine verbesserte Klappe zur Verfügung zu stellen. Insbesondere soll durch die Klappe die Steuerung von Umluft- und Frischluft-Klappe erheblich vereinfacht werden, so dass eine relativ einfache Kinematik zwischen Antrieb (Stellmotor) und Klappen ausreicht.

Diese Aufgabe wird gelöst durch eine Klappe mit den Merkmalen des Anspruchs 1. Vorteilhafte Ausgestaltungen sind Gegenstand der Unteransprüche.

Erfindungsgemäß ist eine Klappe eines Kraftfahrzeug-Belüftungssystems vorgesehen, die im eingebauten Zustand in einem Gehäuse angeordnet ist und mit einer zweiten Klappe die Luftversorgung zum Fahrzeuginnenraum steuert, wobei die Klappe eine Schwenkachse aufweist, um die sie verschwenkbar ist, wobei zumindest ein Teilbereich der Klappenfläche gegenüber der Schwenkachse oder Welle und/oder einem anderen benachbart zur Schwenkachse angeordneten Teilbereich der Klappe verschwenkbar und/oder elastisch verbiegbar ist. Dadurch, dass zumindest ein Teilbereich der Klappe verschwenkbar oder elastisch verbiegbar ist, kann die Welle weiter drehen und gleichzeitig schwenkt die Klappenfläche des entsprechenden Teilbereichs nicht weiter. Auf Grund der elastischen Ausbildung erfolgt bei einem Rückschwenken der Klappe automatisch in Folge der sich aufbauenden Federkraft (Rückstellkraft) ein Zurückschwenken oder Zurückbiegen der entsprechenden Klappenfläche(n).
Durch eine entsprechende Ausgestaltung kann eine Kinematik deutlich vereinfacht werden, bei der eine Bewegung eines Antriebs noch etwas weiter geht, um beispielsweise eine andere Klappe noch etwas weiter zu öffnen, während die erste Klappe bereits geschlossen ist.

Die Schwenk- oder Biegeachse der Klappenfläche verläuft bevorzugt parallel und beabstandet zur Schwenkachse oder Welle der Klappe. Ein relativ geringer Abstand von der Welle ermöglicht eine einfache Herstellung ohne größere Nachteile. Das hiermit verbundene etwas größere erforderliche Spiel für eine ausreichende Abdichtung kann beispielsweise durch einen Rand an der Klappe zur Verfügung gestellt werden, welcher aus einem weichen Material gebildet ist.

Bevorzugt sind zwei Bereiche der Klappenfläche gegenüber der Schwenkachse oder Welle der Klappe verschwenkbar und/oder verbiegbar, wobei die beiden Bereiche der Klappenfläche auf unterschiedlichen Seiten der Schwenkachse bzw. Welle angeordnet sind. Dies ermöglicht eine gleichmäßige Belastung der Klappe, so dass die auftretenden Kräfte relativ gering sind.

Das Umbiegen oder Verbiegen erfolgt bevorzugt in einem Bereich der Klappe, der elastischer ausgebildet ist als der übrige Bereich der Klappe.

Die erhöhte Elastizität kann durch gestalterische Maßnahmen, wie Nuten, Perforationen, Filmscharniere o.ä. bewirkt werden. Alternativ oder zusätzlich kann im elastischen Bereich ein anderer, weicherer Kunststoff verwendet werden, welcher gegebenenfalls auch den Kunststoff, aus welchem im Wesentlichen die übrigen Bereiche der Klappe, d.h. insbesondere die zentralen Bereiche der Klappenflächen, bestehen, umgeben kann.

In einer weiteren Ausgestaltung können die Nuten oder Perforationen auch durch elastische Werkstoffe gefüllt werden. Vorteilhafterweise ist die Klappe in den entsprechenden Bereichen elastisch und zudem luftdicht.

Die Herstellung der Klappe erfolgt bevorzugt mittels Zwei-Komponenten-Spritzgießens aus zwei unterschiedlichen Kunststoffmaterialien mit unterschiedlicher Elastizität.

Vorteilhafterweise ist die Klappe als Umluftklappe ausgeführt.

Gegenstand der Erfindung ist auch ein Ansauggehäuse in dem eine erfindungsgemäße Klappe und eine zweite Klappe angeordnet sind, wobei die zweite Klappe insbesondere als Frischluftklappe ausgeführt ist.

Ein weiterer Gegenstand der Erfindung ist eine Belüftungs- Heizungs- und/oder Klimatisierungseinrichtung, insbesondere für Kraftfahrzeuge, welche eine erfindungsgemäße Klappe und/oder eine erfindungsgemäßes Ansauggehäuse aufweist. Bevorzugt umfasst die Belüftungs- Heizungs- und/oder Klimatisierungseinrichtung zumindest eines der folgenden Bauteile: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden ist die Erfindung anhand von Ausführungsbeispielen näher erläutert. Es zeigen:

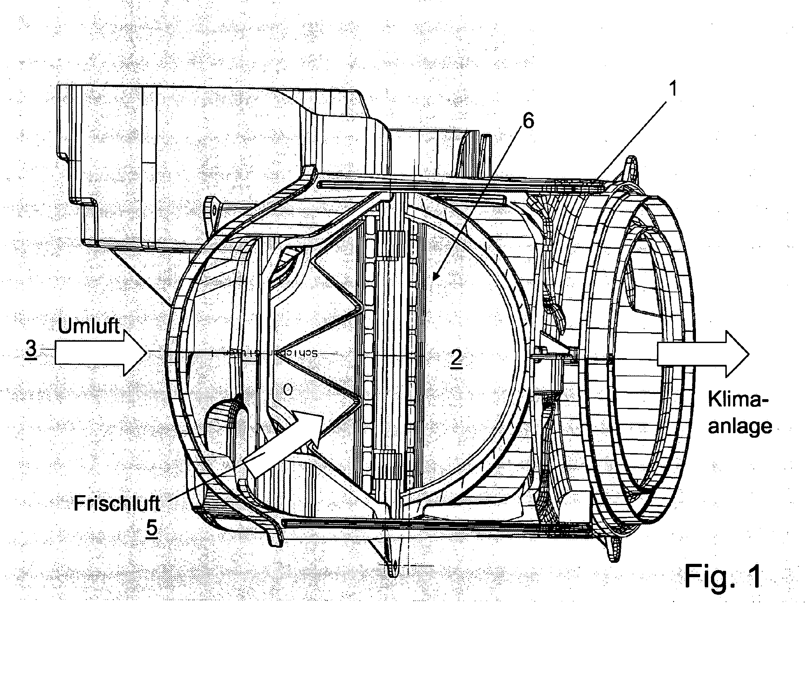

- Fig. 1: eine Ansicht eines Ansauggehäuses einer Kraftfahrzeug-Klimaanlage mit einer Umluft-Klappe gemäß dem ersten Ausführungsbeispiel,
- Fig. 2: einen Schnitt durch das Ansauggehäuse von Fig. 1 mit verschiedenen Klappenstellungen,
- Fig.3: eine Detaildarstellung der Umluft-Klappe, wie sie im Ansauggehäuse von Fig. 1 verwendet wird,
- Fig.4: eine perspektivische Darstellung der Klappen und der Kinematik, des Ansauggehäuses von Fig. 1,
- Fig. 5: eine Detaildarstellung der Umluft-Klappe gemäß dem zweiten Ausführungsbeispiel,
- Fig. 6: eine Detaildarstellung der Umluft-Klappe gemäß dem dritten Ausführungsbeispiel, wobei im unteren Teil ein Schnitt quer durch die Klappe dargestellt ist,
- Fig. 7: eine Detaildarstellung der Umluft-Klappe gemäß dem vierten Ausführungsbeispiel, und
- Fig. 8: einen Ausschnitt eines Schnitts durch die Umluft-Klappe von Fig. 7 entlang Linie VIII-VIII.

In einem Ansauggehäuse 1 einer Kraftfahrzeug-Klimaanlage sind zur Steuerung der Luftzufuhr zum Fahrzeuginnenraum eine Umluft-Klappe 2 in einem vom Fahrzeuginnenraum kommenden Umluft-Kanal 3 und eine Frischluft-Klappe 4 in einem von außen kommenden Frischluft-Kanal 5 im Bereich der Zusammenführung 6 der beiden Kanäle 3 und 5 vorgesehen.

Bei der Frischluft-Klappe 4 handelt es sich um eine im wesentlichen bereits bekannte Klappe. Diese weist eine fest mit der Klappenfläche 4' verbundene Welle 4" auf, die mitsamt der gesamten Klappenfläche 4' eine um eine Schwenkachse verschwenkbar ist. Die Welle 4" ist über einen einstückig mit der Welle 4" ausgebildeten Hebelarm 7 und eine schwenkbar mit dem Hebelarm 7 verbundene Verbindungsstange 8 mit dem Antriebshebel 9 eines Antriebs (nicht dargestellt) gelenkig verbunden, wobei die Verbindung jeweils eine Art Clipsverbindung ist, d.h. es ist ein Hinterschnitt gegeben, und beim Zusammenfügen eine kurzfristige elastische Verformung auftritt, um die beiden Teile miteinander zu verbinden. Je ein Gelenk ist hierbei zwischen dem Hebelarm 7 und der Verbindungsstange und der Verbindungsstange 8 und dem Antriebshebel 9 angeordnet.

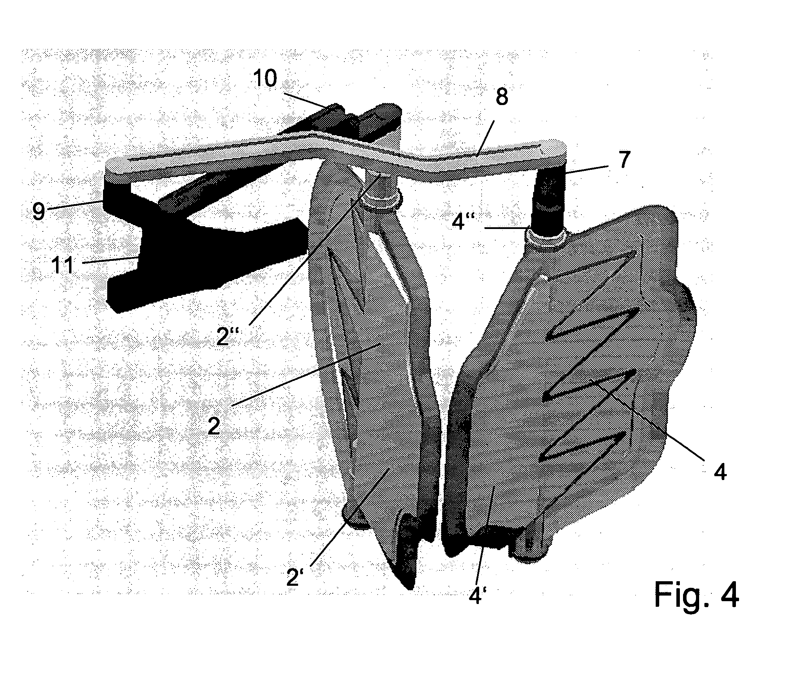

Die Umluft-Klappe 2 ist im Prinzip ähnlich aufgebaut wie die Frischluft-Klappe 4, d.h. sie weist eine Klappenfläche 2' und eine fest mit der Klappenfläche 2' verbundene Welle 2" auf. Die Welle 2" ist über einen einstückig mit derselben ausgebildeten Hebelarm gelenkig mit einer zweiten Verbindungsstange 10 und mit einem zweiten Antriebshebel 11 des Antriebs verbunden, wobei die beiden Antriebshebel 9 und 11 einstückig miteinander ausgebildet sind, jedoch unterschiedlich lang sind. Die Verbindungen von zweitem Hebelarm und zweiter Verbindungsstange 10 und zweiter Verbindungsstange 10 und zweitem Antriebshebel 11 entsprechen der zuvor beschriebenen Clipsverbindung von erstem Hebelarm 7 und erster Verbindungsstange sowie erster Verbindungsstange 8 und erstem Antriebshebel 9. Bezüglich der Darstellung der Kinematik der Umluft- und Frischluft-Klappen 2 bzw. 4 wird auf Fig. 4 verwiesen.

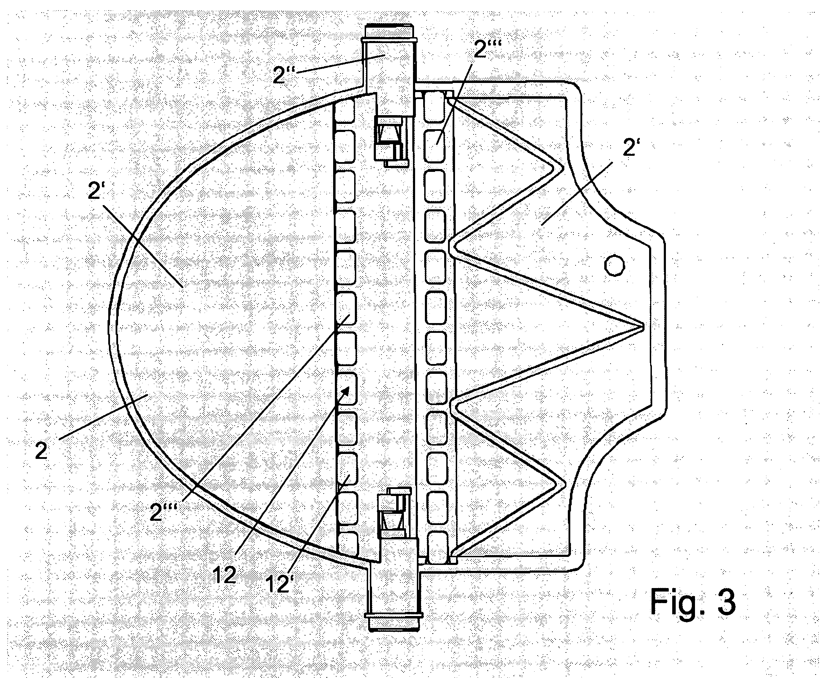

Um mit der in Fig. 4 dargestellten, im Prinzip sehr einfachen Kinematik im Wesentlichen ohne spezielle Getriebeübersetzungen zu ermöglichen, dass die Umluft-Klappe 2 bereits geschlossen ist, wenn die Frischluft-Klappe 4 noch nicht ganz geöffnet ist, d.h. dass kein weiteres Verschwenken der Klappenfläche 2' der Umluft-Klappe 2 bei sich weiter schwenkender Klappenfläche 4' der Frischluft-Klappe 4 erfolgt, ist die Umluft-Klappe 2 derart ausgebildet, dass die beiden sich auf beiden Seiten der Welle 2" nach außen erstreckenden Klappenflächen 2' der Umluft-Klappe 2 gegenüber dem Bereich der Welle 2" Umluftklappe 2 verbiegbar sind. Die Umluft-Klappe 2 besteht gemäß dem ersten Ausführungsbeispiel durchgehend aus einem relativ zähen, elastisch verformbaren Kunststoff. Für das Verbiegen der Klappenflächen 2' gegenüber der Welle 2" sind zwei elastische Bereiche 2"' beiderseits der Welle 2" vorgesehen, die ein Verbiegen der Klappenflächen 2' gegenüber der Welle 2" ermöglichen. Die elastischen Bereiche 2'" verlaufen parallel zur Welle 2" und sind vorliegend im gleichen Abstand zur Schwenkachse der Klappe 2 angeordnet. Die elastischen Bereiche 2'" sind gemäß dem ersten Ausführungsbeispiel dadurch gebildet, dass in einem nutartigen Bereich 12 Perforationen 12', vorliegend gebildet durch in einer Linie angeordnete rechteckförmige Ausschnitte, vorgesehen sind (vgl. Fig. 3).

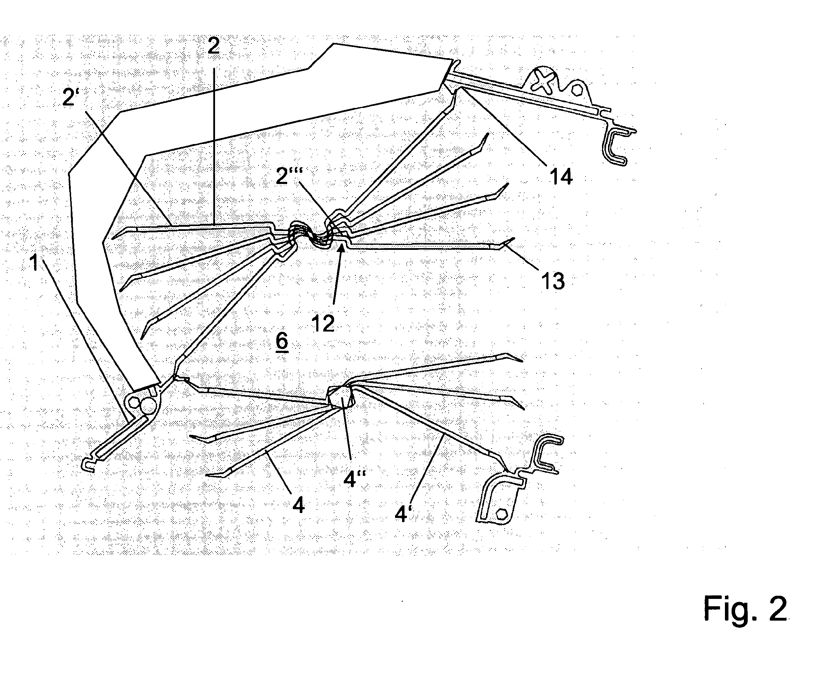

Die Funktion der Klappen 2 und 4 ist die Folgende: die Umluft-Klappe 2 öffnet, wenn die Frischluft-Klappe 4 schließt und umgekehrt. Hierbei schließt die Umluft-Klappe 2 bereits bevor die Frischluft-Klappe 4 vollständig geöffnet ist. Da hierbei die Bewegung des Antriebs weiterläuft, wird die Umluft-Klappe 2 gegen die entsprechenden Anlageflächen 14 entlang dem äußeren Rand 13 der Klappenflächen 2' gepresst. Da die Anpresskraft größer als die sich aufbauende Federkraft der elastischen Bereiche 2''' ist, werden die Klappenflächen 2' im Bereich der elastischen Bereiche 2'" umgebogen, wobei sie mit ihrem Rand 13 weiterhin in Anlage an den Anlageflächen 14 bleiben, so dass die Umluft-Klappe 2 weiterhin dicht schließt. Verschiedene Klappenstellungen sind in Fig. 2 dargestellt, jedoch keine Stellung, in welcher ein Umbiegen der Klappenflächen 2' dargestellt ist.

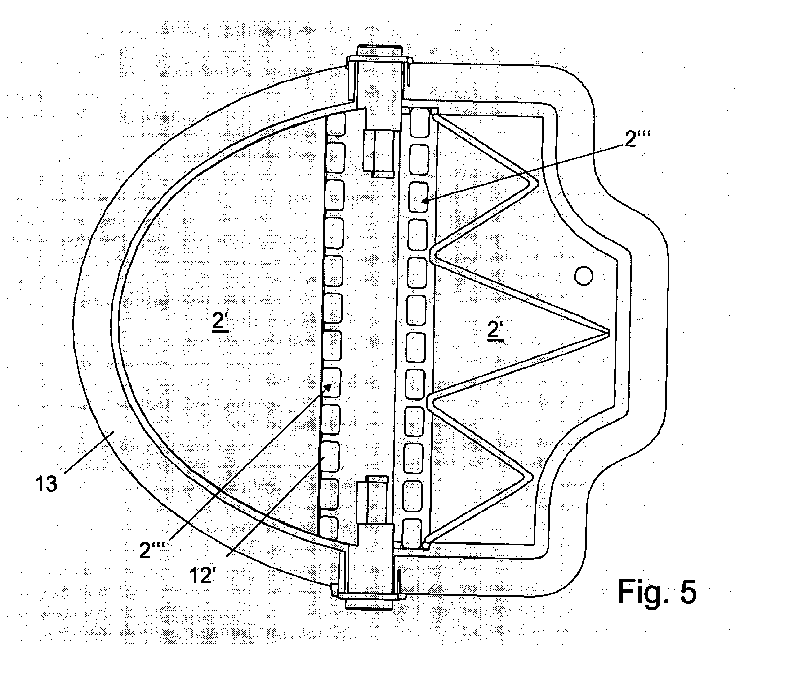

Gemäß dem zweiten, in Fig. 5 dargestellten Ausführungsbeispiel wird im elastischen Bereich 2'" der Umluft-Klappe 2 ein weicherer Kunststoff als im Bereich der Klappenflächen 2' verwendet. Ferner wird der gleiche weichere Kunststoff als Rand 13 verwendet, um eine optimale Abdichtung bei Anlage an die Anlageflächen 14 zu ermöglichen. Die Herstellung erfolgt mittels Zwei-Komponenten-Spritzgießens. Die Funktion entspricht der des ersten Ausführungsbeispiels.

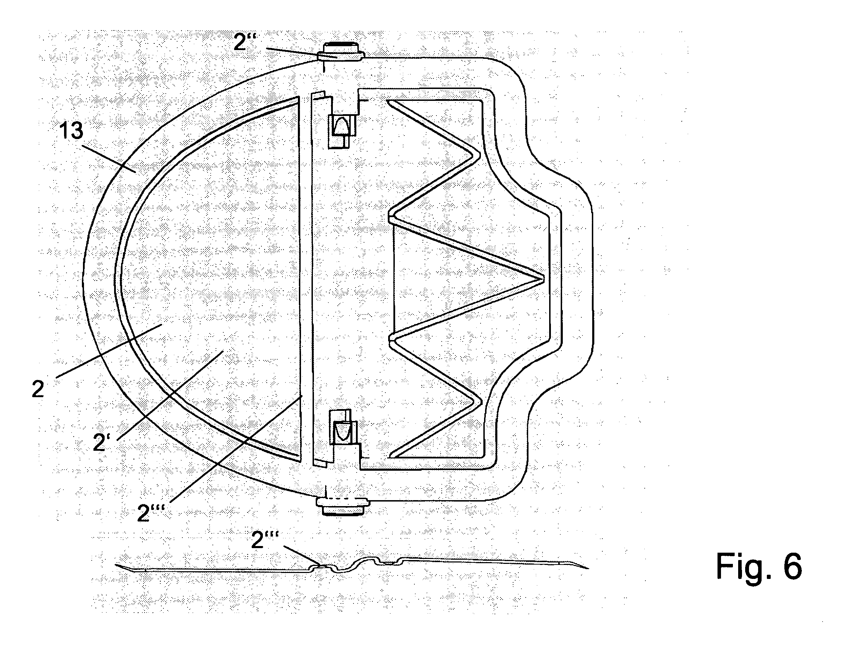

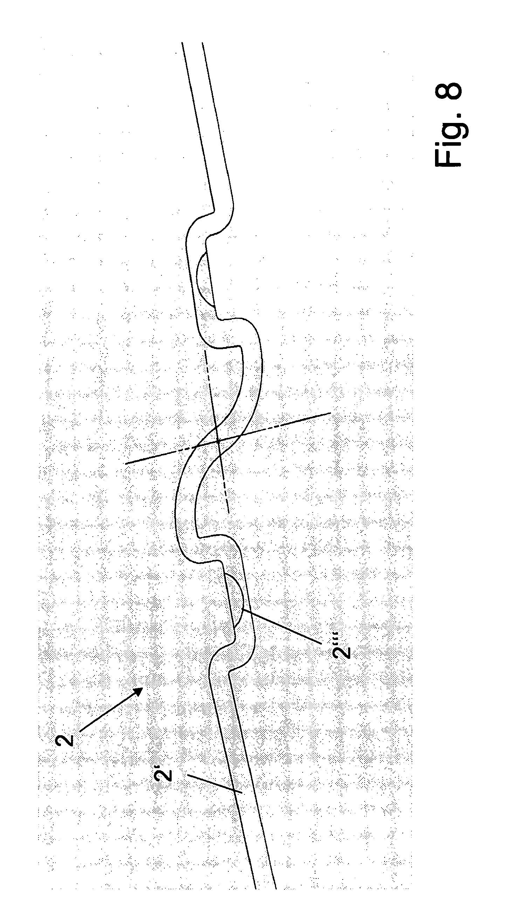

Gemäß dem dritten, in Fig. 6 dargestellten Ausführungsbeispiel sind die elastischen Bereiche 2'" als eine Art Filmscharniere, d.h. mit einer Mehrzahl von Vertiefungen (vgl. Fig. 8), ausgebildet, wobei das stabilere, zähe Grundmaterial, welches beispielsweise das gleiche wie beim ersten Ausführungsbeispiel ist, eine entsprechende Ausgestaltung aufweist, und von dem weicheren Kunststoff umspritzt ist. Zudem ist, wie beim zweiten Ausführungsbeispiel ein aus dem zweiten, weicheren Kunststoff gebildeter Rand 13 vorgesehen. Die Funktion entspricht der des ersten Ausführungsbeispiels.

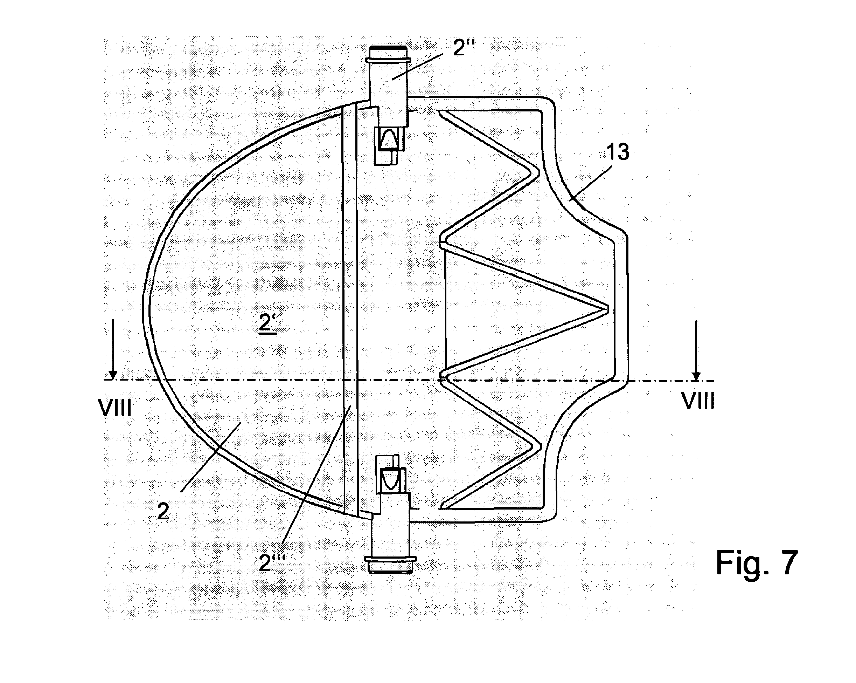

Gemäß dem vierten, in den Figuren 7 und 8 dargestellten Ausführungsbeispiel entspricht die Umluft-Klappe 2 der des dritten Ausführungsbeispiels, jedoch fehlt der weichere Kunststoff im Bereich der elastischen Bereiche 2''' und des Randes 13. Die Funktion entspricht der des ersten Ausführungsbeispiels.

Vorliegend sind die Klappen 2 und 4 asymmetrisch ausgebildet, jedoch ist auch eine symmetrische Ausgestaltung möglich, wobei nicht notwendigerweise eine kreisförmige Außenkontur vorgesehen sein muss. Ferner können an den Klappenflächen Versteifungen oder sonstige zusätzliche Elemente, die z.B. der Luftleitung dienen, vorgesehen sein, sofern diese die Funktion der elastischen Bereiche nicht beeinträchtigen.

Gemäß einem weiteren, nicht in der Zeichnung dargestellten Ausführungsbeispiel ist der über die Klappe nach außen überstehende Bereich, in welchem die Verbindungsstange 10 angreift, derart ausgebildet, dass eine elastische Torsion möglich ist, so dass die Klappenfläche gegenüber der Schwenkachse verdrehbar und somit umbiegbar oder verschwenkbar ist. Um eine ungleichmäßige Belastung zu vermeiden, kann der Antrieb auf beiden Klappenseiten vorgesehen sein, d.h. es sind auch zwei Verbindungsstangen oder eine gegabelte Verbindungsstange vorgesehen.

### Bezugszeichenliste

- 1: Ansauggehäuse
- 2: Umluft-Klappe
- 2': Klappenfläche
- 2": Welle
- 2''': elastischer Bereich
- 3: Umluft-Kanal
- 4: Frischluft-Klappe
- 4': Klappenfläche
- 4": Welle
- 5: Frischluft-Kanal
- 6: Zusammenführung
- 7: Helbelarm
- 8: Verbindungsstange
- 9: Antriebshebel
- 10: zweite Verbindungsstange
- 11: zweiter Antriebshebel
- 12: nutartiger Bereich
- 12': Perforation
- 13: Rand
- 14: Anlagefläche

## Patentansprüche

1. Klappe (2) eines Kraftfahrzeug-Belüftungssystems, die im eingebauten Zustand in einem Gehäuse (1) angeordnet ist und mit einer zweiten Klappe (4) die Luftversorgung zum Fahrzeuginnenraum steuert, wobei die Klappe (2) eine Schwenkachse aufweist, um die sie verschwenkbar ist und zumindest ein Teilbereich der Klappenfläche (2') gegenüber der Schwenkachse oder Welle (2") und/oder einem anderen benachbart zur Schwenkachse angeordneten Teilbereich der Klappe (2) verschwenkbar und/oder elastisch verbiegbar ist,
**dadurch gekennzeichnet, dass**
beim Verschwenken oder Verbiegen des Teilbereichs der Klappenfläche (2') eine Federkraft erzeugt wird, durch welche ein Zurückschwenken oder ein Zurückbiegen des Teilbereichs der Klappenfläche (2') erfolg.

2. Klappe nach Anspruch 1, **dadurch gekennzeichnet, dass** die Schwenk- oder Biegeachse der Klappenfläche (2') parallel und etwas beabstandet zur Schwenkachse oder Welle (2") der Klappe (2) verläuft.

3. Klappe nach Anspruch 1 oder 2, **dadurch gekennzeichnet, dass** zwei Bereiche der Klappenfläche (2') gegenüber der Schwenkachse oder Welle (2") der Klappe (2) verschwenkbar und/oder verbiegbar sind, wobei die beiden Bereiche der Klappenfläche (2') auf unterschiedlichen Seiten der Schwenkachse bzw. Welle (2") angeordnet sind.

4. Klappe nach einem der vorhergehenden Ansprüche, **dadurch gekennzeichnet, dass** das Umbiegen in einem Bereich der Klappe (2) erfolgt, der elastischer ausgebildet ist als der übrige Bereich der Klappe (2).

5. Klappe nach Anspruch 4, **dadurch gekennzeichnet, dass** der elastische Bereich (2'") durch eine Perforation (12') gebildet ist.

6. Klappe nach Anspruch 4 oder 5, **dadurch gekennzeichnet, dass** der elastische Bereich (2'") durch eine Art Filmscharnier gebildet ist.

7. Klappe nach einem der Ansprüche 4 bis 6, **dadurch gekennzeichnet, dass** der elastische Bereich (2'") durch ein weicheres, elastischeres Material gebildet ist als der wesentliche übrige Teil der Klappenflächen (2').

8. Klappe nach einem der Ansprüche 4 bis 7, **dadurch gekennzeichnet, dass** der elastische Bereich (2'") ein weicheres, elastischeres Material aufweist, welches das andere, insbesondere im Wesentlichen die Klappenfläche (2') bildende Material umgibt.

9. Klappe nach einem der vorhergehenden Ansprüche, **dadurch gekennzeichnet, dass** die Klappenflächen (2') von einem elastischen Rand (13) umgeben sind.

10. Klappe nach einem der vorhergehenden Ansprüche, **dadurch gekennzeichnet, dass** die Klappe (2) mittels Zwei-Komponenten-Spritzgießens aus zwei unterschiedlichen Kunststoffmaterialien mit unterschiedlicher Elastizität hergestellt ist.

11. Klappe nach einem der vorhergehenden Ansprüche, **dadurch gekennzeichnet, dass** die Klappe als Umluftklappe (2) ausgeführt ist.

12. Ansauggehäuse mit einer Umluft-Klappe (2) nach einem der Ansprüche 1 bis 11 und einer zweiten Klappe (4).

13. Ansauggehäuse nach Anspruch 12 **dadurch gekennzeichnet, dass** die zweite Klappe als Frischluftklappe (4) ausgeführt ist.

14. Belüftungs- Heizungs- und/oder Klimatisierungseinrichtung, insbesondere für ein Kraftfahrzeug, mit einer Klappe nach einem der Ansprüche 1 bis 11 und/oder einem Ansauggehäuse nach Anspruch 12 oder 13.

15. Belüftungs- Heizungs- und/oder Klimatisierungseinrichtung nach Anspruch 14, **dadurch gekennzeichnet, dass** die Belüftungs- Heizungs- und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. A flap (2) of a motor vehicle ventilation system which when installed is located in a housing (1) and which together with a second flap (4) controls the air supply to the interior of the vehicle, the flap (2) comprising a pivot axis, about which it is pivotable and about which at least a portion of the flap surface (2') is pivotable and/or elastically bendable relative to the pivot axis or shaft (2") and/or another portion of the flap (2) located adjacent to the pivot axis,
**characterized in that**
upon pivoting or bending the portion of the flap surface (2'), a resilient force is generated which causes the portion of the flap surface (2') to pivot back or bend back.

2. The flap as set forth in claim 1, **characterized in that** the pivot or bending axis of the flap surface (2') is oriented parallel and slightly away from the pivot axis or shaft (2") of the flap (2).

3. The flap as set forth in claim 1 or 2, **characterized in that** two portions of the flap surface (2') are pivotable and/or bendable relative to the pivot axis or shaft (2") of the flap (2), the two portions of the flap surface (2') being located on differing sides of the pivot axis or shaft (2").

4. The flap as set forth in any preceding claim, **characterized in that** bending occurs in a portion of the flap (2) which is configured more elastic than the remaining portion of the flap (2).

5. The flap as set forth in claim 4, **characterized in that** the elastic portion (2'") is formed by a perforation (12').

6. The flap as set forth in claim 4 or 5, **characterized in that** the elastic portion (2'") is formed by a kind of film-type hinge.

7. The flap as set forth in any of claims 4 to 6, **characterized in that** the elastic portion (2'") is formed by a softer, more elastic material than the substantially remaining part of the flap surfaces (2').

8. The flap as set forth in any of claims 4 to 7, **characterized in that** the elastic portion (2'") comprises a softer, more elastic material surrounding the other material forming particularly substantially the flap surfaces (2').

9. The flap as set forth in any preceding claim, **characterized in that** the flap surfaces (2') are surrounded by an elastic edge (13).

10. The flap as set forth in any preceding claim, **characterized in that** the flap (2) is produced by two-component injection molding from two different plastics materials having differing elasticity.

11. The flap as set forth in any preceding claim, **characterized in that** the flap is configured as a recirculating air flap (2).

12. An intake housing comprising a recirculating air flap (2) as set forth in any of claims 1 to 11 and a second flap (4).

13. The intake housing as set forth in claim 12, **characterized in that** the second flap is configured as a fresh air flap (4).

14. A ventilation, heating and/or air-conditioning means particularly for a motor vehicle comprising a flap as set forth in any of claims 1 to 11 and/or an intake casing as set forth in claim 12 or 13.

15. The ventilation, heating and/or air-conditioning means as set forth in claim 14, **characterized in that** the ventilation, heating and/or air-conditioning means comprises at least one of the following components: heat exchanger, heater, evaporator, filter, temperature mixing flap, mixing chamber, one or more flow conduits and one or more control flaps for distributing the air to the outlet conduits.

## Revendications

1. Volet (2) d'un système d'aération de véhicule, qui est disposé dans l'état encastré dans un logement (1) et qui commande l'alimentation en air pour l'intérieur véhicule avec un deuxième volet (4), où le volet (2) présente un axe de pivotement autour duquel il peut pivoter et au moins une partie de la surface de volet (2') en face de l'axe de pivotement ou arbre (2") et/ou une autre partie du volet (2) disposé de manière avoisinant l'axe de pivotement est pivotable et/ou déformable de manière élastique
**caractérisé en ce que**
lors du pivotement ou de la déformation de la partie de la surface de volet (2) une élasticité est produite par laquelle un pivotement retour ou une déformation retour de la partie de surface de volet (2') se produit.

2. Volet selon la revendication 1 **caractérisé en ce que** l'axe de pivotement ou de déformation de la surface de volet (2') passe de manière parallèle et quelque peu distancée de l'axe de pivotement ou arbre (2") du volet (2).

3. Volet selon la revendication 1 ou 2 **caractérisé en ce que** deux zones de la surface de volet (2') en face de l'axe de pivotement ou arbre (2") du volet (2) sont pivotables et/ou déformables où les deux premières zones de la surface de volet (2') sont disposées sur des côtés différents de l'axe de pivotement ou arbre (2").

4. Volet selon l'une des revendications précédentes **caractérisé en ce que** la flexion se produit dans une zone du volet (2) qui est formée de manière plus élastique que le reste de la zone du volet (2).

5. Volet selon la revendication 4, **caractérisé en ce que** la zone élastique (2"') est formée par une perforation.

6. Volet selon la revendication 4 ou 5 **caractérisé en ce que** la zone élastique (2"') est formée par une sorte de charnière film.

7. Volet selon l'une des revendications 4 à 6 **caractérisé en ce que** la zone élastique (2"') est formée par un matériau plus souple, plus élastique que la partie restante substantiellement des surfaces de volet (2').

8. Volet selon l'une des revendications 4 à 7 **caractérisé en ce que** la zone élastique (2"') présente un matériau plus souple, plus élastique qui entoure l'autre, en particulier l'autre matériau formant les surfaces de volet (2').

9. Volet selon l'une des revendications précédentes **caractérisé en ce que** les surfaces de volet (2') sont entourées d'un bord élastique (13).

10. Volet selon l'une des revendications précédentes **caractérisé en ce que** le volet (2) est fabriqué à partir de moulage par injection bi-matière à partir de deux matériaux plastiques différents avec deux élasticités différentes.

11. Volet selon l'une des revendications précédentes **caractérisé en ce que** le volet est réalisé comme volet d'air recyclé (2).

12. Coffret d'aspiration avec un volet d'air recyclé (2) selon l'une des revendications 1 à 11 et un deuxième volet (4).

13. Coffret d'aspiration selon la revendication 12 **caractérisé en ce que** le deuxième volet est réalisée comme volet d'air frais (4).

14. Dispositif d'aération, chauffage et/ou climatisation en particulier pour véhicule avec un volet selon l'une des revendications 1 à 11 et/ou un coffret d'aspiration selon la revendication 12 ou 13.

15. Dispositif d'aération, chauffage et/ou climatisation selon la revendication 14 **caractérisé en ce que** le dispositif d'aération, chauffage et/ou climatisation comprend au moins un des éléments de construction suivants : échangeur thermique, radiateur, évaporateur, filtre, volet mélangeur de température, chambre de mélange, un ou plusieurs canaux de d'écoulement et un ou plusieurs volets de commande pour répartir l'air sur les canaux de sortie.
